# EUROPÄISCHE PATENTSCHRIFT

(11) **EP 3 791 980 B1**
(45) Veröffentlichungstag und Bekanntmachung des Hinweises auf die Patenterteilung: **08.03.2023**
(21) Anmeldenummer: 20191787.9
(22) Anmeldetag: 19.08.2020
(51) Int. Cl.: B23B 31/30, B23Q 11/10

(54) **SPANNEINRICHTUNG MIT KÜHLMITTELZUFUHR**
CLAMPING DEVICE WITH COOLANT SUPPLY
DISPOSITIF DE SERRAGE POURVU D'ALIMENTATION EN LIQUIDE DE REFROIDISSEMENT

(30) Priorität: 12.09.2019 DE 102019124523
(43) Veröffentlichungstag der Anmeldung: 17.03.2021
(73) Patentinhaber: Schunk GmbH & Co. KG Spann- und Greiftechnik, 74348 Lauffen am Neckar (DE)
(72) Erfinder: Cantz, Nico, 74394 Hessigheim (DE)
(74) Vertreter: Paul & Albrecht Patentanwälte PartG mbB

(56) Entgegenhaltungen:
- DE-A1- 4 322 552
- DE-A1-102009 023 672
- DE-A1-102018 128 882
- DE-B3-102015 117 590
- US-A- 3 251 604

## Beschreibung

### Spanneinrichtung mit Kühlmittelzufuhr

Die vorliegende Erfindung betrifft eine Spanneinrichtung zum Fixieren eines Werkzeugs an einer Werkzeugmaschine, mit einem eine Spannachse definierenden Grundkörper, der einen Spannbereich aufweist, welcher eine Aufnahme für einen Werkzeugschaft definiert und an einem vorderen axialen Endbereich des Grundkörpers ausgebildet ist, wobei in dem Grundkörper eine mit einem Hydraulikmittel beaufschlagbare Druckkammer ausgebildet ist, wobei zwischen der Aufnahme und der Druckkammer eine Wandung vorgesehen ist, die durch eine Druckerhöhung des Drucks in der Drucckammer elastisch nach innen verformbar ist, um einen in die Aufnahme eingesetzten Werkzeugschaft kraftschlüssig zu fixieren, wobei aufnahmeseitig in der Wandung mindestens eine sich in axialer Richtung erstreckende Kühlmittelzuführnut ausgebildet ist, um bei in die Aufnahme eingesetztem Werkzeugschaft Kühlschmiermittel vom hinteren Bereich der Aufnahme in Richtung der Vorderseite zu leiten.

Derartige Spanneinrichtungen zum Fixieren eines Werkzeugs in einer Werkzeugmaschine sind im Stand der Technik in unterschiedlichen Ausgestaltungen bekannt und dienen dazu, ein Werkzeug wie beispielsweise ein Fräs- oder Bohrwerkzeug zur spanenden Bearbeitung einer Werkstücks an einer Arbeitsspindel einer Werkzeugmaschine zu fixieren. Eine solche Spanneinrichtung umfasst üblicherweise einen Grundkörper, der eine Spannachse definiert, und einen an einem vorderen axialen Endbereich liegenden Spannbereich, in dem das Werkzeug kraftschlüssig gehalten ist.

Spanneinrichtungen sind zum Teil als sogenannte Hydrodehn-Spannfutter ausgebildet. Eine solche Spanneinrichtung ist aus der DE 10 2015 117 590 B3 vorbekannt. Diese besitzt einen Grundkörper mit einem Spannbereich, welcher eine Aufnahme für einen Werkzeugschaft definiert und an einem vorderen axialen Ende des Grundkörpers ausgebildet ist. Die Aufnahme wird ringförmig von einer mit einem Hydraulikmittel beaufschlagbaren Drucckammer umgeben, wobei zwischen der Aufnahme und der Druckkammer eine Wandung vorgesehen ist, die durch eine Druckerhöhung des Drucks in der Druckkammer elastisch nach innen verformbar ist.

Dabei ist die Aufnahme geringfügig größer ausgebildet als der in diese einzusetzende Werkzeugschaft, so dass der Werkzeugschaft ohne nennenswerten Kraftaufwand in die Aufnahme eingebracht werden kann. Zum Spannen des Werkzeugs wird der Druck in der Druckkammer erhöht, so dass sich die Wandung zur Aufnahme hin elastisch nach innen verformt und einen in die Aufnahme eingesetzten Werkzeugschaft kraftschlüssig fixiert.

Um ein in die Aufnahme eingesetztes und in dieser gespanntes Werkzeug während eines Bearbeitungsvorgangs zu kühlen, sind in dem Grundkörper mehrere radial außerhalb der Druckkammer verlaufende Kühlmittelzuführleitungen ausgebildet, die zur vorderen Stirnseite des Grundkörpers hin offen sind. Auf diese Weise kann von einem hinteren Bereich des Grundkörpers Kühlschmiermittel in Richtung der Vorderseite dem Werkzeug zugeleitet werden.

Die DE 10 2018 128 882 A1 offenbart eine Spanneinrichtung gemäß dem Oberbegriff des unabhängigen Anspruchs 1 zum Fixieren eines Werkzeugs an einer Werkzeugmaschine. Diese umfasst eine Dehnhülse, welche einen Aufnahme für ein Werkzeugschaft definiert. Die Aufnahme ist als Bohrung mit einem im Wesentlichen kreisförmigen Querschnitt ausgebildet. Außenseitig umfasst die Dehnhülse Vertiefungen, welche mehrere über den Umfang verteilte Druckkammerabschnitte bilden. Zwischen der Aufnahme und den Druckkammern ist jeweils eine Wandung vorgesehen, die durch eine Druckerhöhung des Drucks in den Druckkammern elastisch nach innen verformbar ist, um einen in die Aufnahme eingesetzten Werkzeugschaft kraftschlüssig zu fixieren. Ferner sind in der Wandung mehrere sich in axialer Richtung erstreckende Kühlmittelzuführnuten ausgebildet, um bei in die Aufnahme eingesetztem Werkzeugschaft Kühlschmiermittel vom hinteren Bereich der Aufnahme in Richtung der Vorderseite zu leiten.

Weitere Spanneinrichtungen sind aus der DE 10 2015 117 590 B3 und der DE 43 22 552 A1 vorbekannt.

Die vorbekannten Spanneinrichtungen zum Fixieren eines Werkzeugs an einer Werkzeugmaschine hat sich grundsätzlich bewährt. Jedoch wird zu teilen als nachteilig angesehen, dass bei der Verwendung von Werkzeugen mit kleinen Durchmessern ein im Verhältnis dazu groß dimensionierter Grundkörper erforderlich ist, um Kühlmittelzuführleitungen in diesem radial außerhalb der Druckkammer entlang zu führen.

Aufgabe der vorliegenden Erfindung ist es somit, eine alternative Spanneinrichtung zu schaffen, welche insbesondere ein Zuführen von Kühlmittel in einer platzsparenden Weise gestattet.

Diese Aufgabe ist bei einer Spanneinrichtung der eingangs genannten Art dadurch gelöst, dass die Druckkammer die Aufnahme ringförmig umgibt und der Querschnitt der Druckkammer der Innenkontur der Aufnahme folgt.

Der Erfindung liegt die Überlegung zugrunde, die Kühlmittelzuführkanäle nicht radial außerhalb der Druckkammer im Grundkörper vorzusehen, sondern durch entsprechende Nuten in der radial zwischen der Aufnahme und der Druckkammer vorgesehenen Wandung zu bilden. Unter aufnahmeseitig in der Wandung ausgebildeten Kühlmittelzuführnuten ist dabei zu verstehen, dass diese zur Aufnahme hin offen sind. Somit strömt das Kühlschmiermittel radial innerhalb der Druckkammer zwischen dem Werkzeugschaft und der Wandung. Dadurch ist es möglich, den Grundkörper im Spannbereich nach außen schlank und somit materialsparend auszubilden.

Erfindungsgemäß umgibt die Druckkammer die Aufnahme ringförmig, wobei der Querschnitt der Druckkammer der Innenkontur der Aufnahme folgt. Dieser Ausgestaltung liegt die Überlegung zugrunde, dass über den gesamten Umfang die Wandung zwischen der ringförmig ausgebildeten Druckkammer und der innenliegenden Aufnahme etwa eine gleichbleibende Wandstärke aufweist, wobei den aufnahmeseitig in der Wandung ausgebildeten Kühlmittelzuführnuten im Verlauf der Druckkammer gefolgt wird. Durch die im Wesentlichen gleichbleibende Wandungsstärke wird verhindert, dass im Bereich der Kühlmittelzuführnuten eine Materialschwächung vorliegt, durch welche die Festigkeit des Grundkörpers in diesem Bereich und somit die Lebensdauer der Spanneinrichtung insbesondere nach einer Vielzahl von Spannvorgängen reduziert werden würde. Die umlaufend konstante Wandungsstärke ermöglicht somit höhere Spanndrücke und eine hohe Lebensdauer.

In weiterer Ausgestaltung der Erfindung können in der Wandung mehrere, insbesondere drei oder vier, gleichmäßig entlang des Umfangs verteilte Kühlmittelzuführnuten ausgebildet sein. Dadurch wird zum einen eine definierte Umströmung des Werkzeugs über seinen gesamten Umfang ermöglicht, andererseits führen die sich zwischen den mehreren Kühlmittelzuführnuten in Umfangsrichtung erstreckenden Abschnitte der Wandung zu mehreren Spannsegmenten, über welche der Werkzeugschaft gespannt wird. Drei oder vier Spannsegmente, die gleichmäßig über den Umfang verteilt sind, führen zu einer präzisen und sauber zentrierten Einspannung eines Werkzeugschafts.

Bevorzugt ist jede Kühlmittelzuführnut zur Vorderseite des Grundkörpers hin offen ausgebildet. Auf diese Weise werden Druckverluste bei der Zuführung des Kühlmittels minimiert. Alternativ ist es auch denkbar, dass in an sich bekannter Weise die Kühlmittelzuführleitung in einen vorderseitig angeordneten ringförmig ausgebildeten Kühlmittelsammelraum mündet, welcher das Kühlschmiermittel staut und kontrolliert über einen insbesondere ringförmig umlaufenden Spalt dem gespannten Werkzeug zuleitet.

In weiterer Ausgestaltung dieser Ausführungsform kann jede Kühlmittelzuführnut einen Querschnitt aufweisen, welcher einem Teilsegment eines Kreises entspricht. Ein solcher Querschnitt der Kühlmittelzuführnuten führt zu abgerundeten Übergängen und vermeidet Spannungsspitzen, welche sich nachteilig auf die Lebensdauer der Spanneinrichtung auswirken können.

Bevorzugt erstreckt sich jede Kühlmittelzuführnut in Umfangsrichtung über einen Umfangswinkel zwischen 15 und 30°. Eine Erstreckung über einen derartigen Umfangswinkel stellt sicher, dass die Kühlmittelzuführnut einerseits einen hinreichend großen Querschnitt aufweist, um die erforderliche Menge an Kühlschmiermittel der Vorderseite zuleiten zu können, andererseits in Umfangsrichtung zwischen den Kühlmittelzuführnuten eine ausreichend große Fläche verbleibt, über welche ein eingesetzter Werkzeugschaft mit einer ausreichend großen Reibkraft gespannt werden kann.

Ferner kann sich jede Kühlmittelzuführnut über die gesamte Länge der Aufnahme erstrecken und rückseitig mit einer im Grundkörper ausgebildeten Kühlschmiermittelzuleitung fluidverbunden sein, welche mit einer korrespondierenden Zuleitung in der Werkzeugmaschine fluidverbindbar ist. Durch die Erstreckung der Kühlmittelzuführnut über die gesamte Länge der Aufnahme kann die erfindungsgemäße Spanneinrichtung flexibel eingesetzt werden, da der Werkzeugschaft wahlweise mehr oder weniger tief in die Aufnahme eingebracht werden kann, ohne dass dadurch die Zufuhr von Kühlschmiermittel beeinflusst wird.

In an sich bekannter Weise kann die Aufnahme eine kreiszylindrische Grundform aufweisen. Eine derartige Ausgestaltung als Aufnahmebohrung ist weit verbreitet und dient dazu, Werkzeuge mit einem kreiszylindrischen Schaft zu spannen.

In weiterer Ausgestaltung dieser Ausführungsform kann die Tiefe jeder Kühlmittelzuführnut zwischen 2 und 10% des Durchmessers der Aufnahme betragen. Dadurch wird bei eingesetztem Werkzeugschaft ein entsprechend großer Strömungsquerschnitt zur Durchleitung einer ausreichenden Menge an Kühlschmiermittel realisiert.

Falls die Aufnahme eine kreiszylindrische Grundform besitzt, ist gemäß der vorliegenden Erfindung bevorzugt vorgesehen, dass der Querschnitt der Druckkammer mindestens ein Umfangssegment aufweist, in welchem die Druckkammer entlang eines Kreises um die Spannachse verläuft und mindestens ein Ausbuchtungssegment aufweist, welches radial außerhalb der mindestens einen Kühlmittelzuführnut liegt und in welchem die Druckkammer nach außen ausbuchtend verläuft. Mit anderen Worten hat die Druckkammer im Querschnitt betrachtet eine im Wesentlichen kreisförmige Grundform, welche zu der kreiszylindrischen Aufnahme korrespondiert, und in den Umfangsbereichen, in welchen die Kühlmittelzuführnuten liegen, eine nach außen verlaufende Ausbuchtung. Auf diese Weise wird eine weitgehend konstante Wandungsstärke über den gesamten Umfang realisiert.

In weiterer Ausgestaltung dieser Ausführungsform kann die Druckkammer in radialer Richtung eine gleichbleibende Dicke aufweisen. Dadurch wird eine gleichmäßige Aufbringung des Spanndrucks erreicht.

Ferner kann die Druckkammer einen zentralen Teillängsabschnitt und zwei beidseitig angrenzende Endabschnitte aufweisen, wobei die Wandung in dem zentralen Teillängsabschnitt dicker ausgebildet ist als in den beiden Endabschnitten der Druckkammer. Durch die dünnere Ausgestaltung der Wandung in den beiden Endabschnitten wird in diesem Bereichen eine erhöhte Verformbarkeit erzielt, wohingegen die Wandung im zentralen Teillängsabschnitt steifer ausgeführt ist, so dass ein eingesetzter Werkzeugschaft im zentralen Teillängsabschnitt mit einem hohen Spanndruck beaufschlagt wird.

Gemäß einer bevorzugten Ausgestaltung der erfindungsgemäßen Spanneinrichtung weist der Grundkörper an seinem hinteren axialen Endbereich eine Maschinenschnittstelle auf, welche einen Befestigungskonus und einen Ringflansch umfasst. Derartige Maschineschnittstellen sind beispielsweise als Hohlschaftkegel (HSK) ausgebildet und nach der DIN 69893-1 normiert. Alternativ kann der Grundkörper auch einen Steilkegel (SK) nach DIN 2080 als Maschinenschnittstelle umfassen.

Vorteilhaft ist in dem Ringflansch der Maschinenschnittstelle ein Spannmittel vorgesehen, das ausgebildet ist, um wahlweise eine Druckerhöhung in dem Hydraulikmittel zu bewirken. Der Ringflansch bietet ausreichenden Raum zur Integration eines Spannmittels, ohne die Außenkontur der Maschinenschnittstelle zu verändern. Das Spannmittel kann derart ausgebildet sein, dass seine Betätigung wahlweise den Druck des Hydraulikmittels in der Druckkammer erhöht.

Gemäß einer Weiterbildung ist das Spannmittel über einen Hydraulikmittelzuführkanal mit der Druckkammer wirkverbunden. Durch den Hydraulikmittelzuführkanal kann das Hydraulikmittel bei entsprechender Druckerhöhung in die Druckkammer strömen.

Bevorzugt umfasst das Spannmittel eine Spannschraube, die ausgebildet ist, um das Hydraulikmittel mit einer Kraft zu beaufschlagen. Eine Spannschraube stellt ein einfach herzustellendes und handzuhabendes Spannmittel dar, was mit einem Betätigungsschlüssel betätigbar ist.

Die Betätigungsrichtung der Spannschraube kann sich quer zu der Spannachse erstrecken. Dann ist die Spannschraube durch eine äußere Umfangsfläche des Ringflansches gut zugänglich. Eine solche Anordnung der Spannschraube geht mit einer besonders einfachen Handhabbarkeit der Spanneinrichtung einher.

Bevorzugt ist die Wandung einteilig mit dem Grundkörper ausgebildet. Dadurch wird das Risiko eines Lecks an der Druckkammer minimiert, da keine als separates Bauteil und mit dem Grundkörper druckdicht zu verbindende Dehnhülse erforderlich ist.

Zweckmäßigerweise ist wenigstens der Spannbereich des Grundkörpers mit der Wandung mittels eines additiven Herstellungsverfahrens gefertigt. Ein additives Fertigungsverfahren ermöglicht eine einfache Herstellung beliebiger Konturen und ist insbesondere geeignet, einen Grundkörper mit einer der Innenkontur der Aufnahme folgenden Druckkammer herzustellen. Beispielsweise kann ein 3D-Druckverfahren, insbesondere das selektive Laserschmelzen angewendet werden, da der Grundkörper vorzugsweise aus einem metallischen Werkstoff, bevorzugt einer Stahllegierung besteht.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen. In der Zeichnung zeigt:
- Figur 1: eine Spanneinrichtung gemäß der vorliegenden Erfindung in einer teilweise geschnittenen Seitenansicht;
- Figur 2: die Spanneinrichtung auf Figur 1 in einer Querschnittansicht entlang der Schnittlinie A-A;
- Figur 3: eine Detailansicht der Figur 2;
- Figur 4: die Spanneinrichtung aus Figur 1 in einer Querschnittansicht entlang der Schnittlinie B-B; und
- Figur 5: eine Detailansicht der Figur 4.

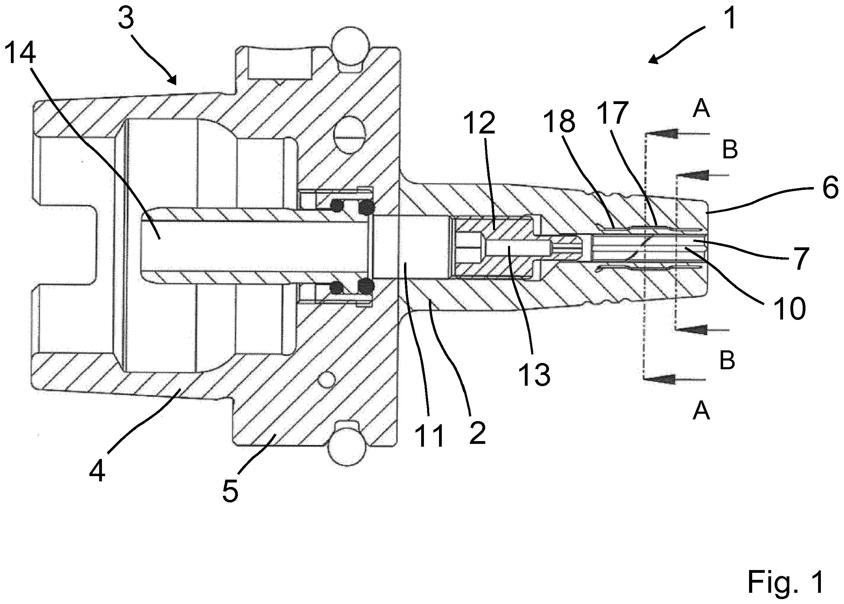

Die Figuren 1 bis 5 zeigen eine als Werkzeughalter 1 ausgebildete Spanneinrichtung gemäß der vorliegenden Erfindung zum Fixieren eines Werkzeugs an einer Werkzeugmaschine.

Der Werkzeughalter 1 besitzt einen eine zentrale Spannachse X definierenden Grundkörper 2, an dessen hinterem Endbereich eine Maschinenschnittstelle 3 mit einem Befestigungskonus 4 und einem Ringflansch 5 angeordnet ist. Der Befestigungskonus 4 ist als Hohlschaftkegel (HSK) nach DIN 69893-1 ausgeführt. Der Ringflansch 5 ermöglicht ein Greifen des Werkzeughalters 1 beispielsweise bei einem Werkzeugwechsel in einer Werkzeugmaschine.

In dem vorderen Endbereich des Grundkörpers 2 ist ein Spannbereich mit einer zur vorderen Stirnfläche 6 hin offenen zentralen Aufnahme 7 mit einer kreiszylindrischen Grundform für einen Werkzeugschaft ausgebildet.

Der Werkzeughalter 1 ist vorliegend als Hydrodehn-Spannfutter ausgebildet. Konkret ist in dem Grundkörper 2 eine mit einem Hydraulikmittel beaufschlagbare Druckkammer 8 ausgebildet, welche die Aufnahme 7 ringförmig umgibt. Zwischen der Aufnahme 7 und der Druckkammer 8 ist eine Wandung 9 vorgesehen, die durch eine Druckerhöhung des Drucks in der Druckkammer 8 elastisch nach innen verformbar ist. Auf diese Weise kann ein in die Aufnahme 7 eingesetzter Werkzeugschaft kraftschlüssig fixiert werden.

Zur Zufuhr von Kühlschmiermittel sind in der Wandung 9 aufnahmeseitig vier jeweils um einen Umfangswinkel von 90° zueinander versetzte, sich in axialer Richtung erstreckende Kühlmittelzuführnuten 10 ausgebildet. Auf diese Weise wird bei einem in die Aufnahme 7 eingesetzten Werkzeugschaft Kühlschmiermittel vom hinteren Bereich der Aufnahme 7 in Richtung der Vorderseite geleitet.

Die zur Vorderseite des Grundkörpers 2 hin offenen Kühlmittelzuführnuten 10 weisen einen einem Teilsegment eines Kreises entsprechenden Querschnitt auf und erstrecken sich in Umfangsrichtung jeweils über einen Umfangswinkel α von etwa 23°. Um die Zuleitung einer hinreichenden Menge an Kühlschmiermittel zu gewährleisten, beträgt die Tiefe jeder Kühlmittelzuführnut 10 vorliegend etwa 5% des Durchmessers der Aufnahme 7.

In dem Grundkörper 2 ist eine Durchgangsbohrung 11 ausgebildet, welche sich rückseitig an die Aufnahme 7 anschließt. In diese ist ein Anschlagelement 12 eingeschraubt, welches mit seiner vorderen Stirnfläche einen in Längsrichtung verstellbaren Anschlag für ein einzusetzendes Werkzeug bildet. Das Anschlagelement 12 besitzt eine Durchgangsöffnung 13, welche eine Zufuhr von Kühlmittel in den Bereich der Aufnahme 7 von hinten ermöglicht.

In dem rückseitigen Endbereich des Grundkörpers 2 ist die Durchgangsbohrung 11 aufgeweitet. In diese ist von hinten eine Kühlschmiermittelzuführleitung 14 eingeschraubt, mit der die Kühlmittelzuführnuten 10 über die Durchgangsöffnung 13 des Anschlagelements 12 fluidverbunden sind. Dadurch kann von der Rückseite des Grundkörpers 2 aus das Kühlmittel den Kühlmittelzuführnuten 10 zugeleitet werden.

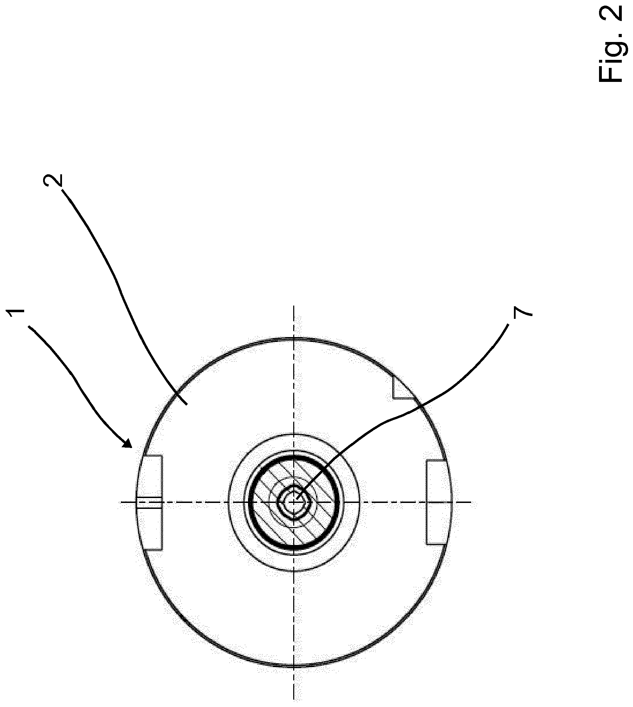

Wie in den Figuren 2 bis 5 erkennbar ist, besitzt die Druckkammer 8 keinen vollständig kreisförmig um die Spannachse X verlaufenden Querschnitt, sondern folgt der Innenkontur der Aufnahme 7, so dass über den Umfang eine gleichbleibende Stärke der Wandung 9 vorliegt. Konkret weist der Querschnitt der Druckkammer 8 insgesamt vier Umfangssegmente 15 auf. In diesem verläuft die Druckkammer entlang eines Kreises um die Spannachse X. Zwischen den Umfangssegmenten 15 ist jeweils ein Ausbuchtungssegment 16 ausgebildet, welches radial außerhalb der Kühlmittelzuführnuten 10 liegt und in welchem die Druckkammer 8 nach außen ausbuchtend verläuft. Dadurch wird über den gesamten Umfang eine weitestgehend gleichbleibende Dicke der Wandung 9 realisiert und eine die Lebensdauer des Werkzeughalters beeinträchtigende Materialschwächung im Bereich der Kühlmittelzuführnuten 10 vermieden.

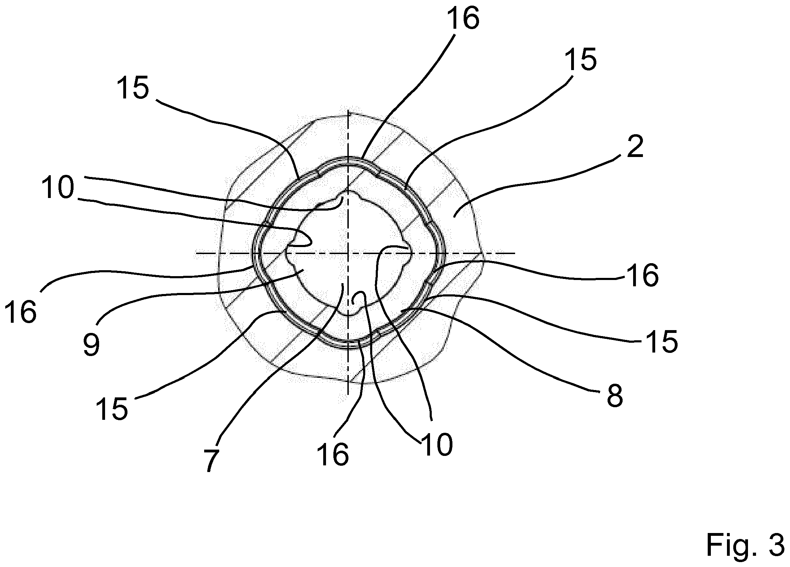

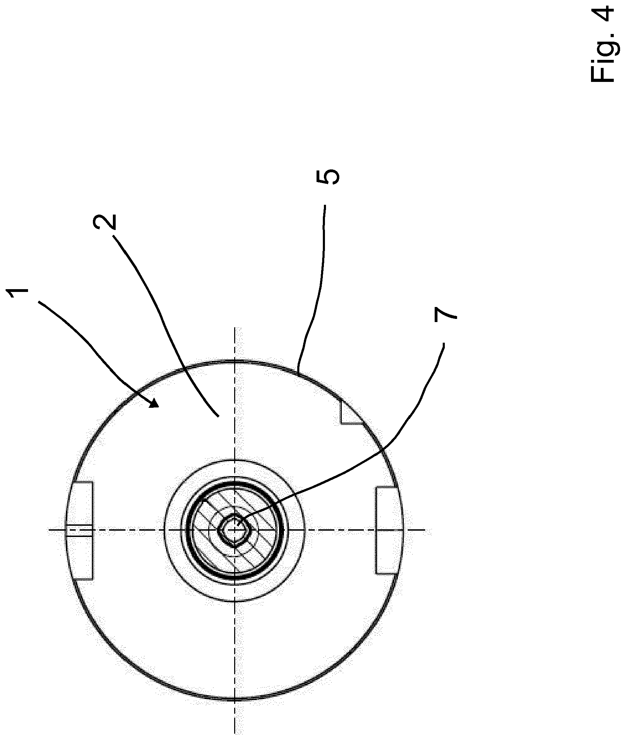

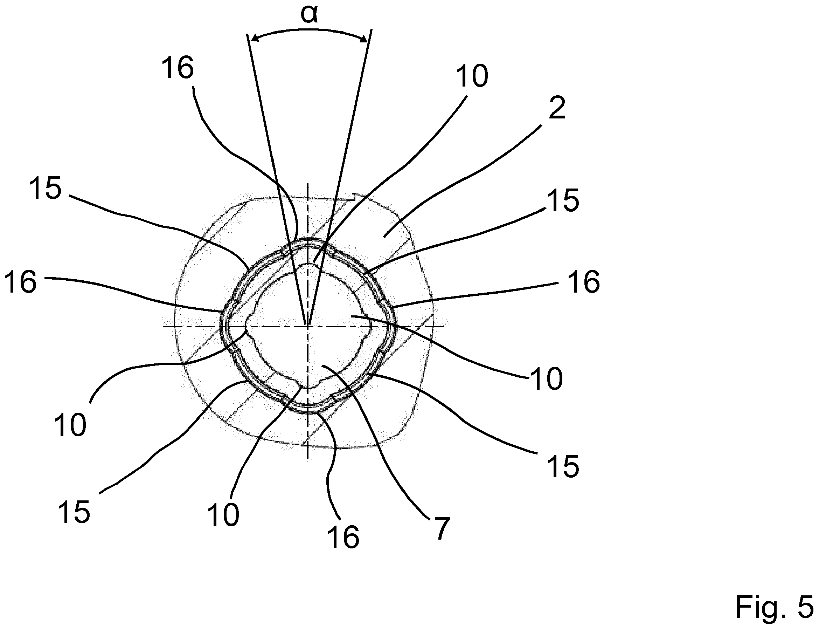

In axialer Richtung weist die Druckkammer 8 einen zentralen Teillängsabschnitt 17, durch welchen die Schnittebene der Figuren 2 und 3 verläuft, und zwei beidseitig angrenzende Endabschnitte 18 auf, wobei durch den vorderen Endabschnitt die Schnittebene der Figuren 4 und 5 verläuft. Die Wandung 9 in den zentralen Teillängsabschnitt 17 dicker ausgebildet ist als in den beiden Endabschnitten 18 der Druckkammer 8, welche in radialer Richtung eine gleichbleibende Dicke aufweist.

In dem Ringflansch 5 der Maschinenschnittstelle 3 sind ferner Spannmittel vorgesehen, die ausgebildet sind, um wahlweise eine Druckerhöhung in dem Hydraulikmittel zu bewirken. Vorliegend umfassen die Spannmittel eine in den Figuren nicht sichtbar dargestellte Spannschraube, welche ausgebildet ist, das Hydraulikmittel mit einer Kraft zu beaufschlagen. Dazu ist die Spannschraube über einen nicht dargestellten Hydraulikmittelzuführkanal mit der Druckkammer 8 wirkverbunden. Die Betätigungsrichtung der Spannschraube erstreckt sich dabei quer zu der Spannachse X, womit die Spannschraube durch eine äußere Umfangsfläche des Ringflansches 5 zugänglich ist.

Durch die Kühlmittelzuführnuten 10, welche dazu führen, dass das Kühlschmiermittel direkt entlang des gespannten Werkzeugschafts radial innerhalb der Druckkammer 8 strömt, wird eine raumsparende Ausgestaltung des Spannbereichs des Grundkörpers 2 realisiert. Gleichzeitig führen die Ausbuchtungssegmente 16 der Druckkammer 8 dazu, dass im Bereich der Kühlmittelzuführnuten 10 die Wandung 9 zwischen der Aufnahme 7 und der Druckkammer 8 nicht geschwächt wird, sondern über den Umfang eine im Wesentlichen konstante Wandstärke vorliegt. Dadurch wird eine hohe Lebensdauer des Werkzeughalters 1 auch bei einer Vielzahl von Spannvorgängen ermöglicht.

### Bezugszeichenliste

- 1: Werkzeughalter
- 2: Grundkörper
- 3: Maschinenschnittstelle
- 4: Befestigungskonus
- 5: Ringflansch
- 6: vordere Stirnfläche
- 7: Aufnahme
- 8: Druckkammer
- 9: Wandung
- 10: Kühlmittelzuführnut
- 11: Durchgangsbohrung
- 12: Anschlagelement
- 13: Durchgangsöffnung
- 14: Kühlschmiermittelzuführleitung
- 15: Umfangssegment
- 16: Ausbuchtungssemgent
- 17: zentraler Teillängsabschnitt
- 18: Endabschnitt

- X: Spannachse
- α: Umfangswinkel

## Patentansprüche

1. Spanneinrichtung zum Fixieren eines Werkzeugs an einer Werkzeugmaschine, mit einem eine Spannachse (X) definierenden Grundkörper (2), der einen Spannbereich aufweist, welcher eine Aufnahme (7) für einen Werkzeugschaft definiert und an einem vorderen axialen Endbereich des Grundkörpers (2) ausgebildet ist,
wobei in dem Grundkörper (2) eine mit einem Hydraulikmittel beaufschlagbare Druckkammer (8) ausgebildet ist, wobei zwischen der Aufnahme (7) und der Druckkammer (8) eine Wandung (9) vorgesehen ist, die durch eine Druckerhöhung des Drucks in der Druckkammer (8) elastisch nach innen verformbar ist, um einen in die Aufnahme (7) eingesetzten Werkzeugschaft kraftschlüssig zu fixieren, wobei
aufnahmeseitig in der Wandung (9) mindestens eine sich in axiale Richtung erstreckende Kühlmittelzuführnut (10) ausgebildet ist, um bei in die Aufnahme (7) eingesetztem Werkzeugschaft Kühlschmiermittel vom hinteren Bereich der Aufnahme (7) in Richtung der Vorderseite zu leiten, **dadurch gekennzeichnet, dass** die Druckkammer (8) die Aufnahme (7) ringförmig umgibt und der Querschnitt der Druckkammer (8) der Innenkontur der Aufnahme (7) folgt.

2. Spanneinrichtung nach Anspruch 1, **dadurch gekennzeichnet, dass** in der Wandung (9) mehrere, insbesondere drei oder vier, gleichmäßig entlang des Umfangs verteilte Kühlmittelzuführnuten (10) ausgebildet sind und/oder dass jede Kühlmittelzuführnut (10) zur Vorderseite des Grundkörpers (2) hin offen ist.

3. Spanneinrichtung nach einem der vorherigen Ansprüche, **dadurch gekennzeichnet, dass** die jede Kühlmittelzuführnut (10) einen Querschnitt aufweist, welcher einem Teilsegment eines Kreises entspricht und/oder dass sich jede Kühlmittelzuführnut (10) in Umfangsrichtung über einen Umfangswinkel (α) zwischen 15 und 30° erstreckt und/oder dass sich jede Kühlmittelzuführnut (10) über die gesamte Länge der Aufnahme (7) erstreckt und rückseitig mit einer Kühlschmiermittelzuleitung (11) fluidverbunden ist.

4. Spanneinrichtung nach einem der vorherigen Ansprüche, **dadurch gekennzeichnet, dass** die Aufnahme (7) eine kreiszylindrische Grundform aufweist.

5. Spanneinrichtung nach Anspruch 4, **dadurch gekennzeichnet, dass** die Tiefe jeder Kühlmittelzuführnut (10) zwischen 2 und 10% des Durchmessers der Aufnahme (7) beträgt.

6. Spanneinrichtung nach Anspruch 4 oder 5, **dadurch gekennzeichnet, dass** der Querschnitt der Druckkammer (8) mindestens 1 Umfangssegment (13) aufweist, in welchem die Druckkammer (8) entlang eines Kreises um die Spannachse (X) verläuft, und mindestens 1 Ausbuchtungssegment (16) aufweist, welches radial außerhalb der mindestens einen Kühlmittelzuführnut (10) liegt und in welchem die Druckkammer (8) nach außen ausbuchtend verläuft.

7. Spanneinrichtung nach einem der vorherigen Ansprüche, **dadurch gekennzeichnet, dass** die Druckkammer (8) in radialer Richtung eine gleichbleibende Dicke aufweist und/oder
dass die Druckkammer (8) einen zentralen Teillängsabschnitt (17) und zwei beidseitig angrenzende Endabschnitte (18) aufweist, wobei die Wandung (9) in dem zentralen Teillängsabschnitt (17) dicker ausgebildet ist als in den beiden Endabschnitten der Druckkammer (8).

8. Spanneinrichtung nach einem der vorherigen Ansprüche, **dadurch gekennzeichnet, dass** der Grundkörper (2) in seinem hinteren axialen Endbereich eine Maschinenschnittstelle aufweist, welche einen Befestigungskonus (4) und einen Ringflansch (5) umfasst.

9. Spanneinrichtung nach Anspruch 8, **dadurch gekennzeichnet, dass** in dem Ringflansch (5) der Maschinenschnittstelle (3) ein Spannmittel vorgesehen ist, das ausgebildet ist, um wahlweise eine Druckerhöhung in dem Hydraulikmittel zu bewirken, wobei insbesondere das Spannmittel über einen Hydraulikmittelzuführkanal mit der Druckkammer (8) wirkverbunden ist.

10. Spanneinrichtung nach Anspruch 9, **dadurch gekennzeichnet, dass** das Spannmittel eine Spannschraube umfasst, die ausgebildet ist, um das Hydraulikmittel mit einer Kraft zu beaufschlagen.

11. Spanneinrichtung nach Anspruch 10, **dadurch gekennzeichnet, dass** sich die Betätigungsrichtung der Spannschraube quer zu der Spannachse (X) erstreckt und die Spannschraube durch eine äußere Umfangsfläche des Ringflansches (5) zugänglich ist.

12. Spanneinrichtung nach einem der vorherigen Ansprüche, **dadurch gekennzeichnet, dass** die Wandung (9) zwischen der Aufnahme (7) und der Druckkammer (8) einteilig mit dem Grundkörper (2) ausgebildet ist.

## Claims

1. Clamping device for fixing a tool on a machine tool, with a base body (2) defining a clamping axis (X) and having a clamping area which defines a receptacle (7) for a tool shank and is formed on a front axial end section of the base body (2),
wherein a pressure chamber (8) which can be acted upon by a hydraulic medium is formed in the base body (2), wherein a wall (9) is provided between the receptacle (7) and the pressure chamber (8), which can be elastically deformed inwards by an increase of the pressure in the pressure chamber (8) in order to fix a tool shank inserted into the receptacle (7) in a force-fitting manner, wherein
at least one coolant supply groove (10) extending in the axial direction is formed in the wall (9) on the receptacle side in order to direct cooling lubricant from the rear region of the receptacle (7) in the direction of the front side when the tool shank is inserted into the receiving means (7), **characterized in that** the pressure chamber (8) surrounds the receiving means (7) in an annular shape and the cross-section of the pressure chamber (8) follows the inner contour of the receptacle (7).

2. Clamping device according to claim 1, **characterized in that** several, in particular three or four, coolant supply grooves (10) distributed uniformly along the circumference are formed in the wall (9) and/or that each coolant supply groove (10) is open towards the front side of the base body (2).

3. Clamping device according to one of the previous claims, **characterized in that** each coolant supply groove (10) has a cross-section which corresponds to a partial segment of a circle and/or **in that** each coolant supply groove (10) extends in the circumferential direction over a circumferential angle (α) of between 15 and 30° and/or **in that** each coolant supply groove (10) extends over the entire length of the receptacle (7) and is fluid-connected at the rear to a cooling lubricant supply line (11).

4. Clamping device according to one of the previous claims, **characterized in that** the receptacle (7) has a basic circular cylindrical shape.

5. Clamping device according to claim 4, **characterized in that** the depth of each coolant supply groove (10) is between 2 and 10% of the diameter of the receptacle (7).

6. Clamping device according to claim 4 or 5, **characterized in that** the cross-section of the pressure chamber (8) has at least 1 circumferential segment (13), in which the pressure chamber (8) extends along a circle around the clamping axis (X), and at least 1 bulge segment (16), which lies radially outside the at least one coolant supply groove (10) and in which the pressure chamber (8) extends outwardly bulging.

7. Clamping device according to one of the previous claims, **characterized in that** the pressure chamber (8) has a constant thickness in the radial direction and/or
**in that** the pressure chamber (8) has a central partial longitudinal section (17) and two end sections (18) adjoining thereto on both sides, the wall (9) being thicker in the central partial longitudinal section (17) than in the two end sections of the pressure chamber (8).

8. Clamping device according to one of the previous claims, **characterized in that** the base body (2) has a machine interface in its rear axial end section, which comprises a fastening cone (4) and an annular flange (5).

9. Clamping device according to claim 8, **characterized in that** a clamping means is provided in the annular flange (5) of the machine interface (3), which is designed to selectively effect an increase in pressure in the hydraulic means, wherein in particular the clamping means is operatively connected to the pressure chamber (8) via a hydraulic medium supply channel.

10. Clamping device according to claim 9, **characterized in that** the clamping means comprises a clamping screw which is designed to apply a force to the hydraulic medium.

11. Clamping device according to claim 10, **characterized in that** the actuating direction of the clamping screw extends transversely to the clamping axis (X) and the clamping screw is accessible through an outer circumferential surface of the annular flange (5).

12. Clamping device according to one of the previous claims, **characterized in that** the wall (9) between the receptacle (7) and the pressure chamber (8) is formed integrally with the base body (2).

## Revendications

1. Dispositif de serrage pour la fixation d'un outil sur une machine-outil, avec un corps de base (2) définissant un axe de serrage (X), qui présente une zone de serrage qui définit un logement (7) pour une tige d'outil et qui est formé sur une zone d'extrémité axiale avant du corps de base (2),
une chambre de pression (8) pouvant être alimentée en fluide hydraulique étant formée dans le corps de base (2), une paroi (9) étant prévue entre le logement (7) et la chambre de pression (8), òu laquelle paroi peut être déformée élastiquement vers l'intérieur par une augmentation de la pression dans la chambre de pression (8), afin de fixer par adhérence une tige d'outil insérée dans le logement (7), où
au côté du logement, au moins une rainure d'alimentation en réfrigérant (10) s'étendant dans la direction axiale est formée dans la paroi (9), afin de guider le réfrigérant lubrifiant de la zone arrière du logement (7) en direction de la face avant lorsque la tige d'outil est insérée dans le logement (7), **caractérisé en ce que** la chambre de pression (8) entoure le logement (7) en forme d'anneau et la section transversale de la chambre de pression (8) suit le contour intérieur du logement (7).

2. Dispositif de serrage selon la revendication 1, **caractérisé en ce que** plusieurs, en particulier trois ou quatre, rainures d'alimentation en réfrigérant (10) réparties uniformément sur la circonférence sont formées dans la paroi (9) et/ou **en ce que** chaque rainure d'alimentation en fluide de refroidissement (10) est ouverte vers la face avant du corps de base (2).

3. Dispositif de serrage selon l'une des revendications précédentes, **caractérisé en ce que** chaque rainure d'alimentation en réfrigérant (10) présente une section transversale qui correspond à un segment partiel d'un cercle et/ou **en ce que** chaque rainure d'alimentation en réfrigérant (10) s'étend dans la direction périphérique sur un angle périphérique (α) compris entre 15 et 30° et/ou **en ce que** chaque rainure d'alimentation en réfrigérant (10) s'étend sur toute la longueur du logement (7) et est reliée par fluide à l'arrière à une conduite d'alimentation en réfrigérant lubrifiant (11).

4. Dispositif de serrage selon l'une des revendications précédentes, **caractérisé en ce que** le logement (7) présente une forme de base cylindrique circulaire.

5. Dispositif de serrage selon la revendication 4, **caractérisé en ce que** la profondeur de chaque rainure d'alimentation en réfrigérant (10) est comprise entre 2 et 10% du diamètre du logement (7).

6. Dispositif de serrage selon la revendication 4 ou 5, **caractérisé en ce que** la section transversale de la chambre de pression (8) présente au moins 1 segment périphérique (13) dans lequel la chambre de pression (8) s'étend le long d'un cercle autour de l'axe de serrage (X), et au moins 1 segment en saillie (16) qui est situé radialement à l'extérieur de la au moins une rainure d'alimentation en réfrigérant (10) et dans lequel la chambre de pression (8) s'étend en saillie vers l'extérieur.

7. Dispositif de serrage selon l'une des revendications précédentes, **caractérisé en ce que** la chambre de pression (8) présente une épaisseur constante en direction radiale et/ou **en ce que** la chambre de pression (8) présente une épaisseur constante en direction axiale, et/on que la chambre de pression (8) présente un tronçon longitudinal partiel central (17) et deux tronçons d'extrémité (18) adjacents des deux côtés, la paroi (9) étant plus épaisse dans le tronçon longitudinal partiel central (17) que dans les deux tronçons d'extrémité de la chambre de pression (8).

8. Dispositif de serrage selon l'une des revendications précédentes, **caractérisé en ce que** le corps de base (2) présente dans sa zone d'extrémité axiale arrière une interface machine qui comprend un cône de fixation (4) et une bride annulaire (5).

9. Dispositif de serrage selon la revendication 8, **caractérisé en ce qu'il** est prévu dans la bride annulaire (5) de l'interface machine (3) un moyen de serrage qui est conçu pour provoquer au choix une augmentation de la pression dans le fluide hydraulique, le moyen de serrage étant en particulier en liaison active avec la chambre de pression (8) par l'intermédiaire d'un canal d'alimentation en fluide hydraulique.

10. Dispositif de serrage selon la revendication 9, **caractérisé en ce que** le moyen de serrage comprend une vis de serrage qui est conçue pour appliquer une force au moyen hydraulique.

11. Dispositif de serrage selon la revendication 10, **caractérisé en ce que** la direction d'actionnement de la vis de serrage s'étend transversalement à l'axe de serrage (X) et **en ce que** la vis de serrage est accessible par une surface périphérique extérieure de la bride annulaire (5).

12. Dispositif de serrage selon l'une des revendications précédentes, **caractérisé en ce que** la paroi (9) entre le logement (7) et la chambre de pression (8) est formée d'une seule pièce avec le corps de base (2).
